# EUROPEAN PATENT SPECIFICATION

(11) **EP 3 620 742 B1**
(45) Date of publication and mention of the grant of the patent: **19.05.2021**
(21) Application number: 19182931.6
(22) Date of filing: 17.07.2014
(51) Int. Cl.: F28D 21/00, F28F 21/06

(54) **ENTHALPY EXCHANGER ELEMENT AND METHOD FOR THE PRODUCTION**
ENTHALPIETAUSCHERELEMENT UND VERFAHREN ZUR HERSTELLUNG
ÉLÉMENT D'ÉCHANGEUR D'ENTHALPIE ET PROCÉDÉ DE PRODUCTION

(30) Priority: 22.07.2013 EP 13003672
(43) Date of publication of application: 11.03.2020
(62) Divisional of application: 14784102.7
(73) Proprietor: Zehnder Group International AG, 5722 Gränichen (CH)
(72) Inventor: RIENDEAU, Marcel, 35423 Liech (DE); HIRSCH, Christian, 08309 Eibenstock (DE); KRUMPHOLZ, Erhard, 8041 Zürich (CH)
(74) Representative: Rentsch Partner AG

(56) References cited:
- EP-A1- 3 022 508
- WO-A1-01/27552
- WO-A1-02/072242
- WO-A1-2013/091099
- CA-A1- 2 798 892
- CA-A1- 2 826 995
- DE-A1- 3 430 204
- US-A1- 2012 073 791

## Description

The present invention refers to enthalpy exchanger elements. Furthermore, the invention discloses a method for the production of enthalpy exchanger elements. A method according to the preamble of claim 1 is for example described in CA 2 798 892 A1. Finally, the invention refers to an enthalpy exchanger including inventive enthalpy exchanger elements. An enthalpy exchanger element according to the preamble of claim 7 is for example described in CA 2 826 995 A1.

It is state of the art to use different kinds of heat exchangers for different purposes. Usually, heat exchangers are used to recover heat energy from one fluid or medium into another one. This kind of heat energy is called sensible energy. The heat energy or sensible energy of one fluid, normally air, is recovered into another one which is running adjacent, e.g. parallel, counter or cross flow, to the first where the fluid is at lower temperature. By inversing fluid flows, the exchange between the two will generate a cooler fluid. Heat exchangers used for sensible energy recovery are usually made of metal or plastic plates. There are different types as there can be cross flow, parallel flow or counter flow configurations. The plates are defining flow channels between themselves so that the fluids can flow between the plates. Such devices are e.g. used in residential and commercial ventilation (HRV).

Another type of energy exchangers refers to the so called latent energy which is the moisture. To exchange the latent energy it is known to use desiccant coated metal or plastic substrates or membranes made from desiccant impregnated cellulose or polymer. Between plates made from cellulose or polymer, air passages are defined or created to allow the fluids to pass along the surface of the plates, thereby transferring moisture from one fluid to the other one. As the membranes usually have no structural strength, it is known to combine the membranes with frames or grids which thereby define spacings between the membranes.

In case of a combination of the above, the energy exchangers are called Enthalpy exchanger. Those Enthalpy exchangers allow for the exchange of sensible and latent energy, resulting in Total Energy recovery.

Membrane materials as currently available are delivered by the roll. The membrane material is the most critical part of an Enthalpy exchanger. The membrane must be fixed and sealed to a kind of grid or frame and arranged in a way to allow for a fluid to flow between each membrane layer. So, it is obvious that Enthalpy exchangers of the known art are a compromise. They will usually lose in sensible energy exchange to gain in latent energy exchange as a result of the selective scope and characteristics of currently used membranes.

Such an enthalpy exchanger built from respective elements is e.g. WO 02/072242 A1. On grids respective membranes made of fibers are positioned. The grids are stapled or stacked thereby altering the direction of the plates in order to create different air flow directions.

In view of the mentioned state of the art it is an **object** of the invention to provide enthalpy exchanger elements and enthalpy exchangers as well as a method for the production of enthalpy exchanger elements which allow for the creation of Enthalpy exchangers whereby the efficiency of sensible energy exchange and latent energy exchange can be varied and controlled and especially improved.

With the invention, the **solution** of the above mentioned object is presented by a method according to the teaching of claim 1.

Preferably, metal foil, more preferably aluminum foil, is used for the plate.

The plate may be perforated using at least one of pins, die and punch, laser, or the like.

Preferably, the border areas of the plate element are not perforated.

Preferably, the forming and a cutting to shape in step b) is performed by embossing using progressive stamping techniques on a metal stamping press with dies and tools, which are rather standard forming processes.

The polymer film may be made of a sulfonated copolymer, preferably a block copolymer.

The polymer film may be bonded, preferably heat bonded and/or glued, to the formed plate element.

With the invention, the **solution** of the above mentioned object is presented by an Enthalpy exchanger element according to the teaching of claim 7.

Preferably, the plate element is made of metal foil, more preferably aluminum foil.

Preferably, the border areas of the plate element are not perforated, preferably in a range of 5 to 20 mm, more preferably in a range of 10 to 20 mm, fromt he outer dimensions of the plate element.

Preferably, the shape of the plate element exhibits an embossing pattern. More preferably, the perforated area of the plate element includes corrugated or embossed surface areas.

The polymer film may be made of a sulfonated copolymer, preferably a block copolymer.

The thin polymer film may be bonded, preferably heat bonded, to the plate element.

Preferably, the plate element has a border non-perforated area which allows gastight connection to another similar plate element.

Preferably, the perforations are openings of diverse shapes and with a surface area equivalent to hole diameters ranging from 50 µm to 5.0 mm, preferably providing a total open area of no less than 50% of the available plate exchange surface.

With the invention, the **solution** of the above mentioned object is presented by an Enthalpy exchanger with at least three plate-like enthalpy exchanger elements fixed to each other as a stack to form two fluid paths allowing fluids to flow there through, wherein the plate-like heat exchanger elements are enthalpy exchanger elements as defined in the previous paragraphs.

Preferably, the enthalpy exchanger elements are fixed to each other by means of welding such as laser welding or ultrasonic welding, or by means of gluing.

According to the invention, a new hybrid exchanger element is provided which on one hand has enough structural strength and density to create air flow channels for any type of cross flow and/or counter flow energy exchanger, thereby allowing for the use of a structurally strong material which is good for sensible energy exchange, on the other hand by size and number of perforations or openings or holes it is possible to define an area which is covered by a thin polymer film with latent energy exchange characteristics. It will be appreciated by a person skilled in the art that the efficiency of sensible energy exchange on one hand and latent energy exchange on the other hand can be defined, controlled and adapted to the respective needs of the environment (dry air, humidity, outside temperature and the like).

According to the invention, the plate element can be made of a metal, preferably aluminum. The element can be provided with corrugations. Corrugations can be designed to optimize the efficiency to pressure drop ratio. The corrugations can be chosen to allow for creating flow channels between similar plates when those are stacked together. By the definition of the corrugation, one advantage will be the enhancement of the surface which is available for energy transfer. This can be built up as large as possible and can even reach an increase of 100% and more. Furthermore, the corrugations can be designed in a way to allow for the easy arrangement of counter flow or cross flow configurations, e.g. by choosing oriented corrugations and alternating the position of the plate.

The border of the plate defines an area where similar plates can be fixed together in an appropriate way. This can be welding and/or folding, hot crimping and the like. This stabilizes the rigidity of the package as well as allows to build up the desired flow channels. The border area can be flattened, tongue/groove system, profiled or rimmed to allow for a tight sealable connection between plates.

The perforations can advantageously be performed prior to the plate forming step, which allows for a fast and convenient perforation step. That way plates can be perforated more easily and furthermore perforated in any desired area.

The polymer film can be made of a polymer according to the state of the art, e.g. like the product Aquivion , a trademark of Solvay or Nexar, a trademark of Kraton.

The material can be e.g. a ionomer in form of a copolymer produced from tetrafluoroethylene, C₂F₄, and Ethanesulfonyl fluoride, 1,1,2,2-tetrafluoro-2-[(trifluoroethenyl)-oxy], C₂F₃-O-(CF₂)₂-SO₂F, sulfonated block copolymer.

According to the invention thin polymer film is a multilayer film comprising a sequence of polymer layers of different polymer types. Preferably, the polymer type of each polymer layer is selected from the group consisting of polyether ester, polyether amide and polyether urethane. Preferably the total thickness of the thin polymer multilayer film is between 5 µm and 200 µm, more preferably between 10 µm and 150 µm. Preferably, the thickness of each individual polymer layer within the thin polymer multilayer film is between 2 µma nd 20 µm, more preferably between 5 µm and 20 µm.

However, the polymers can be adapted to the desired characteristic and features.

It will be appreciated by a person skilled in the art that the amount or efficiency of latent energy recovery depends on the surface provided by the holes or perforations, their shapes and their locations. So it is possible to adapt the heat exchanger plates to the environmental and functional conditions.

By using the highly heat conductive materials as the structural elements for the Enthalpy membrane, high sensible efficiency is ensured. By defining the perforations and choosing the polymer for water vapor transfer, high latent recovery is ensured. Preferably, a total open area for water vapor transfer of no less than 50% of the available plate exchange surface is provided.

The polymer can be combined with additives to manifold and magnify its attributes.

It can be, for instance, efficiently anti-bacterial and can meet fire resistance requirements (UL). Its viscosity can be adjusted to achieve the optimal tunable exchange features of the plate allowing as high a moisture exchange as possible.

Before applying the polymer film to the plate element, the plate element is formed to exhibit the aforementioned features, e.g. corrugations, side walls, flat border areas and the like. The polymer film is then formed into the same shape as the plate element and can be permanently bonded or glued to said plate element. The bonding or gluing may be performed with or without heating.

The polymer film may be applied to one side of the plate element after the forming step of said plate element, thereby completely covering the plate element as well as the holes or perforations. Therefore the perforations are not limited in size and can be chosen in any desired dimension.

According to an alternate embodiment, not part of the present invention, the perforations are not permanently covered and sealed by a polymer film, but rather filled with a polymer solution, which can be the same material as the polymer film, and subsequently cured. The polymer may be supplied in a dispersed or dissolved state. The dispersion or solution comprising the polymer can be brought to the plate by thereby filling or covering the holes or perforations with the polymer dispersion or solution by way of spraying, dipping, serigraphy or any other lamination method. In order to maintain the same perforation characteristics, one side of the flat plate element may be completely covered by a liner (placeholder-film), which does not bond to the plate element during the forming step and can easily be removed after the forming step. Subsequently to removing the liner (placeholder-film) the perforation holes can be filled with the polymer solution, as described above.

It will be appreciated by a person skilled in the art that the sensible energy transfer and the latent energy transfer capabilities of the heat exchanger are tunable and adjustable. The plates are adaptable to environmental conditions by the variable mosaic geometry of the perforations. E.g. an exchanger can be designed to operate at a temperature under the freezing point (-10°C) without ice build-up only by choosing the right position of the perforations and polymeric treatment of the constitutive plates.

However, under harsh conditions; especially plate exchangers tend to build ice in the narrow border channels, thus decreasing the exchange efficiency of the plate exchanger. This is due to a reduced flow velocity of fluids in said border channels.

In order to overcome this issue, the width of corrugations in the border area of the plate element is larger compared to the width of the corrugations in the middle area of the plate element. Thus, the width of the resulting flow channels in the border area is increased and as a result the flow velocity of the fluid is increased, thus preventing or at least delaying ice from building up.

The rigidity of the structural elements could make the plate and thereby the polymer film capable of handling a pressure differential up to 1kPa within the exchanger. This advantage opens the door to larger exchanger constructions for commercial applications.

The invention provides a simple method for the production of total energy exchanger plates allowing sensible as,well as latent energy exchange. The design and the adaptability of the plates allows for the construction and design of plate exchangers which are optimized with regard to the technical requirements and/or the environmental conditions.

Stamped, corrugated or embossed aluminum, stainless steel, resin based plates and/or vacuum formed plastic plates can be made using proven automation technologies including the assembly, e.g. by vacuum grip, and seal, e.g. by laser welding, ultra sound welding, folding, crimping, to obtain packages of superposed rigid plates. The plates are washable, fire retardant, antibacterial, sealed e.g. leakage proof. They have all valuable advantages that are necessary to create highly efficient total energy exchangers.

The plate perforation, too, can be performed by pre-programmed continuous laser processes, by mechanical systems like needle-roller and the like, or chemical etching processes.

Further features, advantages and aspects of the invention become obvious from the following description of the drawings. The drawings show:
- Fig. 1: a flow chart illustrating a sequence of steps of the production method according to the invention; and
- Fig. 2: a sequence of states of the production of an enthalpy exchanger element in cross sectional view during the production method according to the invention.

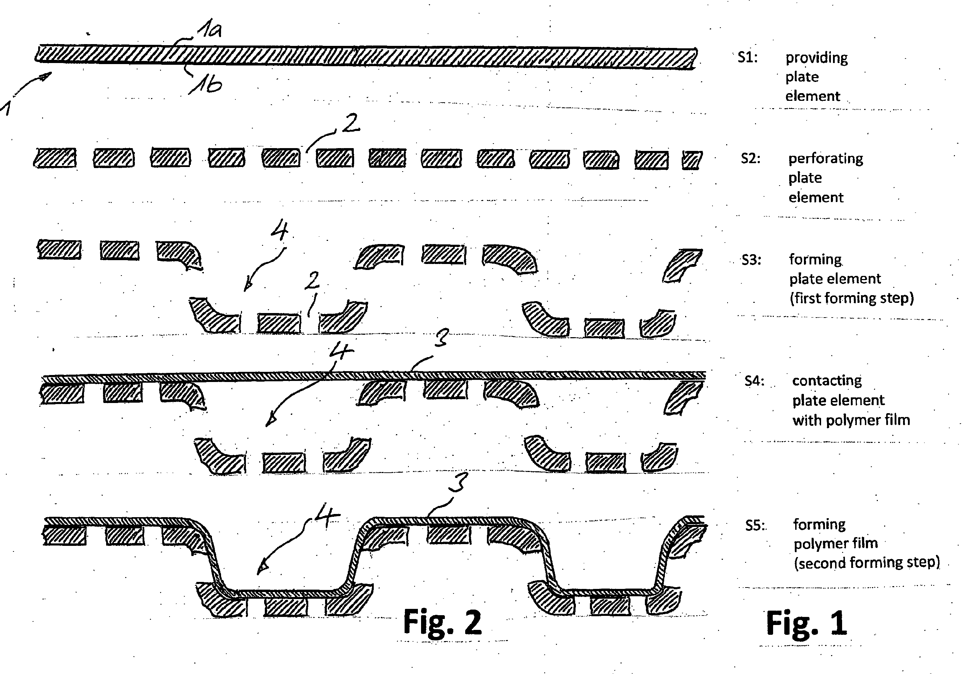

In Fig. 1, a sequence of steps of the production method according to the invention are shown. Each step shown in Fig. 1 corresponds to a resulting state schematically shown in Fig. 2. It should be noted that the illustrated geometric parameters such a thicknesses, hole diameters, curvatures etc. in Fig. 2 are for exemplary purposes, only. Therefore, they do not necessarily represent the proper or preferred ratios of such parameters.

In providing step S1, a flat yet unformed metal plate element 1 with defined outer dimensions is provided. In perforating step S2, a portion of the flat metal plate element 1 is transferred to a perforation device (not shown) where the flat metal plate element 1 is perforated by a punching die (not shown) selected in accordance with the desired size of the holes, In the present case, the entire plate element 1 is perforated with a symmetric hole pattern, except for the border areas (not shown) to allow welding of the plate elements 1 in order to form the plate exchanger (not shown). The perforation pattern is made up of a plurality of holes 2 extending across the entire plate thickness from a first surface 1a to a second surface 1b of the plate element 1.

Subsequently to the perforating step, in plate forming step S3 (a first forming step), the now perforated flat plate element 1 is transferred to a first forming device (not shown), which is embodied by a metal stamping press with dies and tools or an embossing device, where the flat plate element 1 is formed into a desired shape. In this plate forming step S3, the border areas, fluid inlets and outlets and corrugations 4 are formed into the plate element 1. The corrugation pattern is made up of a plurality of corrugations 4 extending across the plate area.

Subsequently to the plate forming step S3, in plate contacting step S4, a thin polymer film 3 is moved next to one side, i.e. surface 1a, of the now perforated and formed plate element 1.

Subsequently to the plate contacting step S4, in polymer film forming step S5 (a second forming step), the now perforated, formed and polymer-film-contacted plate element 1 is then transferred to a second forming device (not shown), which is embodied by a thermoforming device, preferably a vacuum forming device, where said one side, i.e. surface 1a, of the now perforated, formed and polymer-film-contacted plate element 1 is completely covered by the thin polymer film 3. The polymer film 3 is made of a proprietary sulfonated block copolymer or any type of such sulfonated block copolymers.

In the present embodiment of the invention, the border areas are being formed in non-perforated areas, while the corrugations are being formed in perforated areas of the plate element 1.

Thereby, during the plate forming step S3, which is a separate forming step of the flat plate element 1, and during the polymer film forming step S5, which is a separate forming step of the thin polymer film 3, the plate element 1 and the thin polymer film 3 are formed into the exact same shape and are permanently bonded to each other, due to the heat, which is applied by the vacuum forming device.

These first formed and then thin-polymer-film-covered plates 1 constitute the enthalpy exchanger elements according to the invention. They will be stacked to build an enthalpy exchanger (also referred to as a total energy exchanger) core e.g. for ventilation systems to exchange heat from outgoing to incoming air (or vice versa for free cooling in summer) as well as humidity from outgoing to incoming air in winter (or vice versa for moisture reduction in summer or all year round in hot and humid climatic zones).

The cross sectional shape of the corrugations 4 may be rectangular, square or triangular. It may also be trapezoidal such half hexagonal.

The drawing and the description do in no way restrict the invention and are meant for illustrating the invention by an example, only.

### Reference numerals:

- 1: flat plate element
- 1a: first surface
- 1b: second surface
- 2: hole
- 3: thin polymer film
- 4: corrugation
- S1: providing step
- S2: perforating step
- S3: plate forming step (first forming step)
- S4: plate contacting step
- S5: polymer film forming step (second forming step)

## Claims

1. Method for the production of enthalpy exchanger elements comprising steps of:
a) perforating a flat plate element (1) according to a predetermined perforation pattern within the plate outer dimensions;
b) forming the plate element (1) into a desired embossing pattern and geometrical shape; and
c) applying to at least one side (1a) of the plate element (1) a polymer film (3) with water vapor permeation characteristics
**characterized by**
the thin polymer film being a multilayer film comprising a sequence of polymer layers of different polymer types.

2. Method according to claim 1, **characterized in that** for the plate metal foil, preferably aluminum foil, is used.

3. Method according to any of the preceding claims, **characterized in that** the plate is perforated using at least one of pins, die and punch, lasers.

4. Method according to any of the preceding claims, **characterized in that** the forming and a cutting to shape in step b) is performed according to progressive stamping techniques on a metal stamping press with dies and tools.

5. Method according to any of the preceding claims, **characterized in that** the polymer film is made of a block copolymer.

6. Method according to any of the preceding claims, **characterized in that** the polymer film is bonded, preferably heat bonded, to the formed plate element.

7. Enthalpy exchanger element, preferably produced using the method as defined in any of claims 1 to 6, including a plate element (1) with a shape exhibiting a predetermined perforation pattern, wherein at least one side (1a) of the plate element (1) is covered by a thin polymer film with water vapor transmission characteristics
**characterized by**
the thin polymer film being a multilayer film comprising a sequence of polymer layers of different polymer types.

8. Enthalpy exchanger element according to claim 7, **characterized in that** the plate element is made of metal foil, preferably aluminum foil.

9. Enthalpy exchanger element according to claims 7 or 8, **characterized in that** the border areas of the plate element are not perforated.

10. Enthalpy exchanger element according to any of the preceding claims 7 to 9, **characterized in that** the shape of the plate element exhibits an embossing pattern.

11. Enthalpy exchanger element according to any of the preceding claims 7 to 10, **characterized in that** the thin polymer film is bonded, preferably heat bonded and/or glued, to the plate element.

12. Enthalpy exchanger element according to any of the preceding claims 7 to 11, **characterized in that** the plate element has a border non-perforated area which allows gastight connection to another similar plate element.

13. Enthalpy exchanger element according to any of the preceding claims 7 to 12, **characterized in** providing a total open area of no less than 50% of the available plate exchange surface.

14. Enthalpy exchanger with at least three plate-like enthalpy exchanger elements fixed to each other as a stack to form two fluid paths allowing fluids to flow there through, **characterized in that** said plate-like enthalpy exchanger elements are elements according to any of the claims 7 to 13.

15. Enthalpy exchanger according to claim 14, **characterized in that** the platelike enthalpy exchanger elements are fixed to each other using at least one of crimping, welding and gluing processes.

## Patentansprüche

1. Verfahren für die Herstellung von Enthalpietauscherelementen, die folgenden Schritte umfassend:
a) Perforieren eines ebenen Plattenelements (1) gemäß einem vorbestimmten Perforationsmuster innerhalb der äußeren Abmessungen der Platte;
b) Ausbilden des Plattenelements (1) in ein erwünschtes Prägemuster und eine erwünschte geometrische Gestalt; und
c) Aufbringen eines Polymerfilms (3) mit Eigenschaften einer Wasserdampfpermeabilität auf mindestens eine Seite (1a) des Plattenelements (1),
**dadurch gekennzeichnet, dass**
der dünne Polymerfilm eine Mehrschichtfolie ist, die eine Sequenz von Polymerschichten verschiedener Polymerarten umfasst.

2. Verfahren nach Anspruch 1, **dadurch gekennzeichnet, dass** für die Platte eine Metallfolie, vorzugsweise Aluminium-Folie, verwendet wird.

3. Verfahren nach einem der vorhergehenden Ansprüche, **dadurch gekennzeichnet, dass** die Platte unter Verwendung von mindestens Nadeln, Stanzform und Stempel oder Lasern perforiert wird.

4. Verfahren nach einem der vorhergehenden Ansprüche, **dadurch gekennzeichnet, dass** das Ausbilden und ein Schneiden der Gestalt in Schritt b) gemäß progressiven Stanztechniken auf einer Metallstanzpresse mit Stanzformen und Werkzeugen durchgeführt wird.

5. Verfahren nach einem der vorhergehenden Ansprüche, **dadurch gekennzeichnet, dass** der Polymerfilm aus einem Blockcopolymer angefertigt wird.

6. Verfahren nach einem der vorhergehenden Ansprüche, **dadurch gekennzeichnet, dass** der Polymerfilm mit dem ausgebildeten Plattenelement verbunden wird, vorzugsweise durch Wärmeverbunden wird.

7. Enthalpietauscherelement, das vorzugsweise unter Verwendung des Verfahrens hergestellt ist, wie in einem der Ansprüche 1 bis 6 definiert, ein Plattenelement (1) mit einer Gestalt umfassend, die ein vorbestimmtes Perforationsmuster zeigt, wobei mindestens eine Seite (1a) des Plattenelements (1) durch einen dünnen Polymerfilm mit Eigenschaften einer Wasserdampfdurchlässigkeit abgedeckt ist
**dadurch gekennzeichnet, dass**
der dünne Polymerfilm eine Mehrschichtfolie ist, die eine Sequenz von Polymerschichten verschiedener Polymerarten umfasst.

8. Enthalpietauscherelement nach Anspruch 7, **dadurch gekennzeichnet, dass** das Plattenelement aus Metallfolie, vorzugsweise Aluminium-Folie, angefertigt ist.

9. Enthalpietauscherelement nach den Ansprüchen 7 oder 8, **dadurch gekennzeichnet, dass** die Randbereiche des Plattenelements nicht perforiert sind.

10. Enthalpietauscherelement nach einem der vorhergehenden Ansprüche 7 bis 9, **dadurch gekennzeichnet, dass** die Gestalt des Plattenelements ein Prägemuster zeigt.

11. Enthalpietauscherelement nach einem der vorhergehenden Ansprüche 7 bis 10, **dadurch gekennzeichnet, dass** der dünne Polymerfilm mit dem Plattenelement verbunden ist, vorzugsweise mit wärmeverbunden ist und/oder geklebt ist.

12. Enthalpietauscherelement nach einem der vorhergehenden Ansprüche 7 bis 11, **dadurch gekennzeichnet, dass** das Plattenelement einen nicht perforierten Randbereich aufweist, der eine gasdichte Verbindung mit einem anderen ähnlichen Plattenelement ermöglicht.

13. Enthalpietauscherelement nach einem der vorhergehenden Ansprüche 7 bis 12, **gekennzeichnet durch** Bereitstellen einer offenen Gesamtfläche von nicht weniger als 50 % der verfügbaren Plattentauschoberfläche.

14. Enthalpietauscher mit mindestens drei plattenförmigen Enthalpietauscherelementen, die als ein Stapel aneinander montiert sind, um zwei Fluidwege auszubilden, die Fluiden ermöglichen, dort hindurch zu strömen, **dadurch gekennzeichnet, dass** die plattenförmigen Enthalpietauscherelemente Elemente nach einem der Ansprüche 7 bis 13 sind.

15. Enthalpietauscher nach Anspruch 14, **dadurch gekennzeichnet, dass** die plattenförmigen Enthalpietauscherelemente unter Verwendung von mindestens einem Quetsch-, Schweiß- oder Klebeverfahren aneinander montiert sind.

## Revendications

1. Procédé pour la production d'éléments d'échangeur enthalpique, comprenant les étapes de :
a) la perforation d'un élément en plaque plat (1) selon un motif de perforation prédéterminé à l'intérieur des dimensions extérieures de plaque ;
b) la formation de l'élément en plaque (1) en un motif de gaufrage et une forme géométrique souhaités ; et
c) l'application, sur au moins un côté (1a) de l'élément en plaque (1), d'un film de polymère (3) avec des caractéristiques de perméation de vapeur d'eau,
**caractérisé en ce que**
le film de polymère mince est un film multicouche comprenant une séquence de couches de polymère de différents types de polymère.

2. Procédé selon la revendication 1, **caractérisé en ce qu'**une feuille de métal, de préférence une feuille d'aluminium, est utilisée pour la plaque.

3. Procédé selon l'une quelconque des revendications précédentes, **caractérisé en ce que** la plaque est perforée en utilisant au moins un d'épingles, de matrice et poinçon, de lasers.

4. Procédé selon l'une quelconque des revendications précédentes, **caractérisé en ce que** la formation et une coupe en forme dans l'étape b) est réalisée selon des techniques d'estampage progressif sur une presse d'estampage de métal avec des matrices et des outils.

5. Procédé selon l'une quelconque des revendications précédentes, **caractérisé en ce que** le film de polymère est fait d'un copolymère bloc.

6. Procédé selon l'une quelconque des revendications précédentes, **caractérisé en ce que** le film de polymère est lié, de préférence thermo-lié, à l'élément en plaque formé.

7. Élément d'échangeur enthalpique, de préférence produit en utilisant le procédé selon l'une quelconque des revendications 1 à 6, incluant un élément en plaque (1) avec une forme présentant un motif de perforation prédéterminé, dans lequel au moins un côté (1a) de l'élément en plaque (1) est couvert par un film de polymère mince avec des caractéristiques de transmission de vapeur d'eau,
**caractérisé en ce que**
le film de polymère mince est un film multicouche comprenant une séquence de couches de polymère de différents types de polymère.

8. Élément d'échangeur enthalpique selon la revendication 7, **caractérisé en ce que** l'élément en plaque est fait de feuille de métal, de préférence de feuille d'aluminium.

9. Élément d'échangeur enthalpique selon les revendications 7 ou 8, **caractérisé en ce que** les zones de bordure de l'élément en plaque ne sont pas perforées.

10. Élément d'échangeur enthalpique selon l'une quelconque des revendications précédentes 7 à 9, **caractérisé en ce que** la forme de l'élément en plaque présente un motif de gaufrage.

11. Élément d'échangeur enthalpique selon l'une quelconque des revendications précédentes 7 à 10, **caractérisé en ce que** le film de polymère mince est lié, de préférence thermo-lié et/ou collé, à l'élément en plaque.

12. Élément d'échangeur enthalpique selon l'une quelconque des revendications précédentes 7 à 11, **caractérisé en ce que** l'élément en plaque a une zone non perforée de bordure qui permet le raccordement étanche aux gaz à un autre élément en plaque similaire.

13. Élément d'échangeur enthalpique selon l'une quelconque des revendications précédentes 7 à 12, **caractérisé par** la fourniture d'une superficie ouverte totale non inférieure à 50 % de la surface d'échange de plaque disponible.

14. Échangeur enthalpique avec au moins trois éléments d'échangeur enthalpique de type plaque fixés les uns aux autres sous forme d'empilement pour former deux chemins de fluide permettant à des fluides de s'écouler à travers ceux-ci, **caractérisé en ce que** lesdits éléments d'échangeur enthalpique de type plaque sont des éléments selon l'une quelconque des revendications 7 à 13.

15. Échangeur enthalpique selon la revendication 14, **caractérisé en ce que** les éléments d'échangeur enthalpique de type plaque sont fixés les uns aux autres en utilisant au moins un de processus de sertissage, de soudage et de collage.
